# EUROPEAN PATENT APPLICATION

(11) **EP 4 831 900 A1**
(43) Date of publication of application: **28.10.2026**
(21) Application number: 24906930.3
(22) Date of filing: 28.10.2024
(51) Int. Cl.: G06Q 50/02, A01G 7/00, A01G 17/02

(54) **FRUIT MANAGEMENT DEVICE, FRUIT MANAGEMENT SYSTEM, AND COMPUTER PROGRAM**

(30) Priority: 21.12.2023 JP 2023215603
(71) Applicant: KUBOTA CORPORATION, Osaka-shi, Osaka 530-0011 (JP)
(72) Inventor: HIRONAKA, Nao, Sakai-shi, Osaka 590-0908 (JP); OGUMA, Takashi, Sakai-shi, Osaka 590-0908 (JP); SASAMOTO, Hirokazu, Sakai-shi, Osaka 590-0908 (JP)
(74) Representative: Cabinet Beau de Loménie
(86) International application number: PCT/JP2024/038410
(87) International publication number: WO 2025/134542

(57) **Abstract**

A fruit management apparatus 10 including a processing unit 21 configured to perform, using one or both of identification information on a fruit and identification information on a tree bearing the fruit, information processing for managing quality information of the fruit. The management apparatus 10 includes: a first input unit 23 configured to acquire the quality information measured by a measuring instrument 11; and a second input unit 24 configured to acquire a voice as an input. The processing unit 21 performs save processing of saving the quality information, when the voice input to the second input unit 24 is a voice that instructs the processing unit 21 to perform the save processing.

## Description

### TECHNICAL FIELD

The present invention relates to a fruit management apparatus, a fruit management system, and a computer program for managing quality information of a fruit. The present application claims priority to Japanese Patent Application No. 2023-215603 filed on December 21, 2023, the entire disclosure of which is hereby incorporated by reference.

### BACKGROUND ART

As an apparatus for measuring the quality of a fruit, a portable measuring instrument has been known (see Patent Literature 1). On a farm, a worker conducts measurement work while carrying the measuring instrument. The measuring instrument is configured to irradiate a fruit with measurement light and to receive light which has transmitted through or has been reflected from the fruit, thereby performing nutritional component analysis by, for example, a spectroscopic analysis method. The measuring instrument is capable of nondestructively measuring the quality of the fruit, such as a sugar content and an acid content.

### CITATION LIST

### [PATENT LITERATURE]

PATENT LITERATURE 1: Japanese Laid-Open Patent Publication No. 2020-101409

### SUMMARY OF THE INVENTION

A fruit management apparatus according to an aspect of the present disclosure is a management apparatus including a processing unit configured to perform, using one or both of identification information on a fruit and identification information on a tree bearing the fruit, information processing for managing quality information of the fruit, the fruit management apparatus including: a first input unit configured to acquire the quality information measured by a measuring instrument; and a second input unit configured to acquire a voice as an input, wherein the processing unit performs save processing of saving the quality information, when the voice input to the second input unit is a voice that instructs the processing unit to perform the save processing.

A fruit management system according to an aspect of the present disclosure includes: the fruit management apparatus; and a measurement unit capable of transmitting the quality information to the fruit management apparatus.

A computer program according to an aspect of the present disclosure is a computer program for causing a computer to operate as a fruit management apparatus configured to perform, using one or both of identification information on a fruit and identification information on a tree bearing the fruit, information processing for managing quality information of the fruit, the computer program causing the computer to carry out: a first input step of acquiring the quality information measured by a measuring instrument; a second input step of acquiring a voice as an input; and a save processing step of performing save processing of saving the quality information when the input voice is a voice that instructs the computer to perform the save processing.

### BRIEF DESCRIPTION OF DRAWINGS

[FIG. 1] FIG. 1 is an explanatory diagram of a management system including a fruit management apparatus.
[FIG. 2] FIG. 2 is a block diagram of the fruit management apparatus.
[FIG. 3] FIG. 3 is an explanatory diagram illustrating an image displayed on a display (a farm selection screen).
[FIG. 4] FIG. 4 is an explanatory diagram illustrating an image displayed on the display.
[FIG. 5] FIG. 5 is an explanatory diagram illustrating an image displayed on the display.
[FIG. 6] FIG. 6 is an explanatory diagram illustrating an image displayed on the display.
[FIG. 7] FIG. 7 is an explanatory diagram illustrating an image displayed on the display.
[FIG. 8] FIG. 8 is an explanatory diagram illustrating an image displayed on the display.
[FIG. 9] FIG. 9 is an explanatory diagram illustrating an image displayed on the display.
[FIG. 10] FIG. 10 is an explanatory diagram illustrating an image displayed on the display.
[FIG. 11] FIG. 11 is an explanatory diagram illustrating an image displayed on the display.
[FIG. 12] FIG. 12 is an explanatory diagram illustrating an image displayed on the display.
[FIG. 13] FIG. 13 is a flowchart of quality management processing.
[FIG. 14] FIG. 14 is a flowchart of an input step.
[FIG. 15] FIG. 15 is a sequence diagram illustrating another means of voice recognition processing.
[FIG. 16] FIG. 16 is a sequence diagram of voice recognition processing including first collation processing.
[FIG. 17] FIG. 17 is an explanatory diagram illustrating trees aligned in a row and measurement positions of the respective trees.
[FIG. 18] FIG. 18 is a flowchart of second collation processing.
[FIG. 19] FIG. 19 is a diagram illustrating exemplary determination information.

### DETAILED DESCRIPTION

### <Technical problem>

Patent Literature 1 discloses a measuring instrument including: a housing accommodating an arithmetic processing unit configured to perform analysis processing; a measurement head configured to emit and receive measurement light; and a cable extending from the housing to the measurement head. A worker conducts measurement work while holding the measurement head by hand. Quality information obtained through the measurement is recorded in association with information for management (identification information) such as identification information of a measurement target fruit and identification information of a tree bearing the measurement target fruit.

However, since the worker holds the measurement head by hand, manually inputting the information for management such as the identification information to, for example, another mobile terminal apparatus or the like makes the work complicated, resulting in poor workability.

Hence, the present invention provides a fruit management apparatus capable of improving the workability of quality management of fruit, a fruit management system including the fruit management apparatus, and a computer program for causing a computer to operate as the fruit management apparatus.

### <Advantageous effect>

The workability of quality management of fruit is improved.

### <Outline of embodiments of the present disclosure>

An outline of below-listed embodiments of the present disclosure is described.
(1) A fruit management apparatus of the present embodiment is a management apparatus including a processing unit configured to perform, using one or both of identification information on a fruit and identification information on a tree bearing the fruit, information processing for managing quality information of the fruit, the fruit management apparatus including: a first input unit configured to acquire the quality information measured by a measuring instrument; and a second input unit configured to acquire a voice as an input, wherein the processing unit performs save processing of saving the quality information, when the voice input to the second input unit is a voice that instructs the processing unit to perform the save processing.
   According to the fruit management apparatus having this configuration, in the save processing, the identification information and the quality information obtained by the measuring instrument are saved in association with each other. The save processing can be performed with ease, using a worker's voice (utterance) acquired by the second input unit. This configuration eliminates the necessity of manual input by a worker and improves the workability of quality management of fruit.
(2) When the voice that instructs the processing unit to perform the save processing is convertible into the identification information, the processing unit converts the voice that instructs the processing unit to perform the save processing into identification information and saves the converted identification information and the quality information in association with each other in the save processing.
   The fruit management apparatus having this configuration can acquire the identification information and perform the save processing of saving the quality information, in such a manner that the worker merely utters the identification information.
(3) In the fruit management apparatus described in (1), in a case where the second input unit acquires the voice that instructs the processing unit to perform the save processing and a different voice from the voice that instructs the processing unit to perform the save processing, when the different voice is convertible into the identification information, the processing unit converts the different voice into identification information and saves the converted identification information and the quality information in association with each other in the save processing.
   The fruit management apparatus having this configuration can acquire the identification information and perform the save processing of saving the quality information, in such a manner that the worker merely utters a voice for performing the save processing (referred to as an activating voice) and a voice convertible into the identification information even when the identification information is different from the activating voice.
(4) In the fruit management apparatus described in (2) or (3), when the voice that instructs the processing unit to perform the save processing or a different voice from the voice that instructs the processing unit to perform the save processing is convertible into a character string represented by at least one of symbols and alphanumeric characters and the character string is distinguishable from a word, the processing unit determines that the voice that instructs the processing unit to perform the save processing or the different voice from the voice that instructs the processing unit to perform the save processing is convertible into the identification information.
   According to the fruit management apparatus having this configuration, the processing unit can convert a voice uttered by the worker or the like, into the identification information.
(5) In the fruit management apparatus described in any one of (1) to (4), the fruit management apparatus includes a storage device configured to store determination information for determining the voice that instructs the processing unit to perform the save processing, and the processing unit determines, based on the determination information, whether the voice input to the second input unit is the voice that instructs the processing unit to perform the save processing.
   The fruit management apparatus having this configuration can determine the voice that instructs the processing unit to perform the save processing, from among various voices with ease.
(6) In the fruit management apparatus described in (5), when the voice input to the second input unit is different from the voice that instructs the processing unit to perform the save processing, the processing unit does not start the save processing, but performs correction processing of allowing input of a voice through the second input unit.
   The fruit management apparatus having this configuration can instruct the worker to input a voice again through the correction processing even when the voice that instructs the processing unit to perform the save processing is not obtained, and can correctly start the save processing, using the voice.
(7) The fruit management apparatus described in (6) includes an output unit configured to output a sound, and the processing unit performs, as the correction processing, processing of causing the output unit to output, by a sound, information that prompts a worker to utter the identification information.
   According to this configuration, when a result of first collation processing is negative, the worker can make a retry quickly.
(8) In the fruit management apparatus described in any one of (1) to (7), when the voice input to the second input unit is convertible into identification information, the processing unit is capable of performing registration processing of registering the identification information indicated by the voice, in a database.
   According to this configuration, the database, in which the identification information is accumulated, is enriched.
(9) In the fruit management apparatus described in any one of (1) to (8), the identification information is identification information ordered in a direction from one side to another side of a tree row constituted of a plurality of the trees aligned in a row.
   According to this configuration, the worker manages quality information with ease by conducting measurements along the tree row.
(10) The fruit management apparatus described in any one of (1) to (9) includes a position acquisition unit configured to acquire position information indicating a position where a measurement is conducted using the measuring instrument, and the processing unit is capable of performing grouping processing of grouping, based on the position information, associated information including the identification information and the quality information associated with each other.
   According to this configuration, for example, in a case where a plurality of trees are aligned in a row, the fruit management apparatus can estimate that these trees are aligned in a row, and can automatically group associated information of the trees included in the row.
(11) In the fruit management apparatus described in (10), the processing unit is capable of performing, as the grouping processing, processing of adding row identification information indicating a row, to the associated information on a plurality of the trees whose measurement positions are arranged in one direction.
   According to this configuration, in a case where a plurality of trees are aligned in a row, row identification information is provided to these trees. As a result, the trees can be managed on a row (group) basis.
(12) In the fruit management apparatus described in any one of (1) to (11), the processing unit is capable of performing second save processing of further saving one or both of additional information of the fruit and additional information of the tree in association with associated information including the identification information and the quality information associated with each other.
   As the additional information, for example, image information of a tree is associated with the associated information. As the additional information, alternatively, information indicating a state, such as an appearance or a taste, of a fruit is associated with the associated information.
(13) In the fruit management apparatus described in any one of (1) to (12), the processing unit is capable of performing output processing of outputting measurement task information indicating a task of measuring the fruit using the measuring instrument.
   According to this configuration, the fruit management apparatus can guide the worker so as to prevent the worker from making a mistake in measurement procedure or unintentionally omitting to conduct a measurement.
(14) In the fruit management apparatus described in (13), the processing unit performs, as the output processing, processing of outputting, as the measurement task information, information of a target tree corresponding to a tree bearing a fruit to be measured.
   In this case, the worker can sequentially measure trees bearing fruits to be measured. Therefore, the worker can conduct the work with ease.
(15) The fruit management apparatus described in (14) includes a position acquisition unit configured to acquire position information indicating a position where a measurement is conducted using the measuring instrument, the processing unit is capable of performing second collation processing of collating the position information acquired by the position acquisition unit, with a database in which position information of a tree is previously accumulated, and the processing unit performs, as the second collation processing, processing of collating position information of the target tree acquired by the position acquisition unit, with the position information of the target tree indicated by the measurement task information, the position information being accumulated in the database.
   According to this configuration, the worker can conduct measurement work of the target tree indicated by the measurement task information, without errors.
(16) In the fruit management apparatus described in (15), when a result of the second collation processing is positive, the processing unit starts the save processing.
   According to this configuration, the quality information of the fruit on the target tree indicated by the measurement task information is saved in correct association with the identification information of the target tree.
(17) In the fruit management apparatus described in (15) or (16), when a result of the second collation processing is negative, the processing unit does not start the save processing, but performs correction processing of allowing input of a voice through the second input unit.
   In a case where a tree measured using the measuring instrument is different from the target tree indicated by the measurement task information, a result of the second collation processing is negative. According to this configuration, the worker has an opportunity to conduct a measurement using the measuring instrument again. As a result, an error in quality management is prevented.
   The processing unit performs, as the correction processing, processing of causing the output unit to output, by a sound, information that prompts the worker to conduct a measurement using the measuring instrument (i.e., to make a retry).
(18) In the fruit management apparatus described in any one of (1) to (17), the fruit is a grape.
   On a farm, trees bearing grapes are often aligned in a row. The fruit management apparatus is particularly suitable for management of quality information of such grapes.
(19) A fruit management system of the present embodiment includes: the fruit management apparatus described in any one of (1) to (18); and a measurement unit capable of transmitting the quality information to the fruit management apparatus.
   The fruit management system of the present disclosure improves the workability of quality management of fruit.
(20) A computer program of the present embodiment is a computer program for causing a computer to operate as a fruit management apparatus configured to perform, using one or both of identification information on a fruit and identification information on a tree bearing the fruit, information processing for managing quality information of the fruit, the computer program causing the computer to carry out: a first input step of acquiring the quality information measured by a measuring instrument; a second input step of acquiring a voice as an input; and a save processing step of performing save processing of saving the quality information, when the input voice is a voice that instructs the computer to perform the save processing.

According to the computer program having this configuration, in the save processing step, the identification information and the quality information obtained by the measuring instrument are saved in association with each other. The save processing step can be carried out, using a worker's voice (utterance) acquired by the second input unit. This configuration eliminates the necessity of manual input by a worker and improves the workability of quality management of fruit.

### <Details of embodiments of the present disclosure>

Details of embodiments of the present disclosure are described below with reference to the drawings. It should be noted that at least some of the embodiments described below may be arbitrarily combined with each other.

### [Management system]

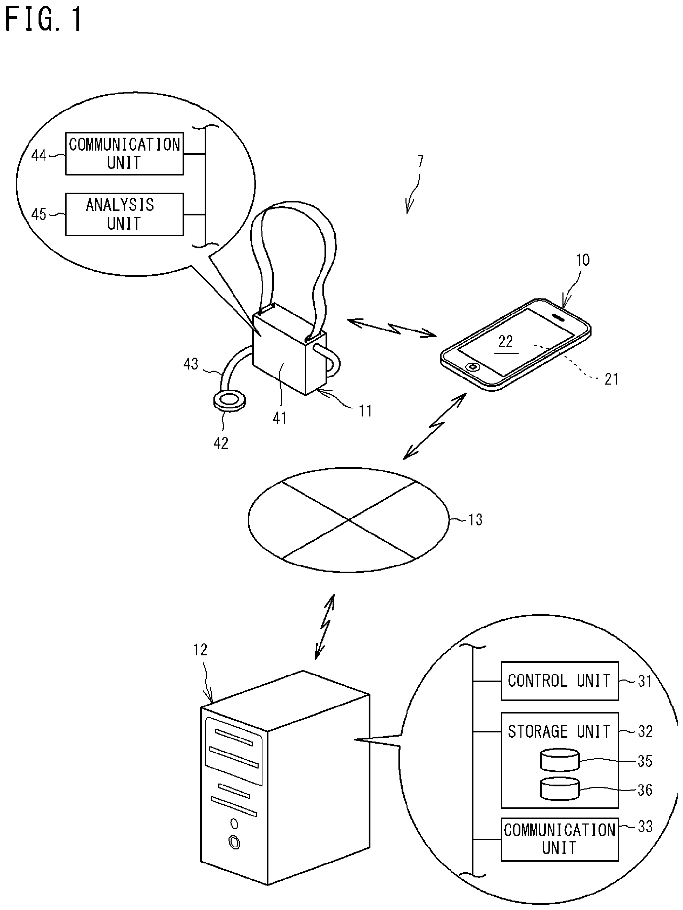

FIG. 1 is an explanatory diagram of a management system including a fruit management apparatus. A management system 7 illustrated in FIG. 1 is a system for managing the quality of a fruit grown in an agricultural field such as a farm. The fruit is a grape in the present embodiment; however, another fruit may be adopted in the present embodiment. The grape is used for winemaking, for example. The management system 7 (fruit management system) illustrated in FIG. 1 includes a fruit management apparatus 10 (hereinafter, referred to as a "management apparatus 10") and a measuring instrument 11. The management system 7 may also include a server apparatus 12 in addition to the management apparatus 10 and the measuring instrument 11. A worker conducts measurement work while holding the management apparatus 10 including a mobile terminal apparatus, and the measuring instrument 11 on a farm.

The management apparatus 10 is an apparatus for managing the quality information of a grape. For the management, the management apparatus 10 uses identification information for identifying one or both of the grape and a tree bearing the grape. Specifically, the identification information includes one or both of identification information of a bunch of grapes and identification information of a tree bearing a plurality of the bunches of grapes. The identification information is information indicating an identification number (ID number) constituted of one or both of alphabets and numerals, for example. The identification information may be information for management, different from the ID number.

On a grape farm, trees bearing grapes are aligned in a row. In the present embodiment, therefore, the identification information is ordered in a direction from one side to another side of a tree row constituted of the plurality of trees aligned in a row. The identification information of each tree is ordered in a direction from one side to another side of a tree row, and the identification information of each bunch of grapes on the tree is numbered in sequence from a bunch of grapes on a lower one of the branches of the tree at a tip end of the branch. A worker acquires and manages quality information with ease by conducting measurements along the tree row. The management apparatus 10 of the present embodiment is particularly suitable for management of quality information on grapes on the trees aligned in a row. In the foregoing embodiment, the identification information is ordered in a direction from one side to another side of a tree row. However, the identification information is not necessarily ordered in a direction from one side to another side of a tree row.

The management apparatus 10 is a mobile terminal apparatus and more specifically a mobile computer including a processor (arithmetic processing unit) and a semiconductor memory such as a RAM or a ROM. The computer installs therein a computer program for managing quality information. The processor reads the computer program from the memory and executes the computer program. The mobile terminal apparatus thus functions as the management apparatus 10 configured to perform each processing for quality management of a grape. The mobile terminal apparatus is a smartphone, a tablet terminal, or the like.

The management apparatus 10 has a wireless communication function and is connectable to a communication network 13. The management apparatus 10 is capable of communicating with the server apparatus 12 via the network 13.

The server apparatus 12 is, for example, a computer installed in a management facility on a farm. The server apparatus 12 includes a control unit 31, a storage unit 32, and a communication unit 33. The control unit 31 includes one or more computers, and is connected to the storage unit 32 and the communication unit 33 via an internal bus. The storage unit 32 includes a hard disk, a semiconductor memory, or the like. The communication unit 33 is a communication interface for communicating with the management apparatus 10 via the network 13.

The measuring instrument 11 is a device configured to measure the quality of grape. For example, the measuring instrument 11 is configured to irradiate a grape with measurement light and to receive light which has transmitted through or has been reflected from the grape, thereby performing nutritional component analysis by a spectroscopic analysis method. The measuring instrument 11 is capable of nondestructively measuring the quality such as a sugar content, an acid content (a total amount of organic acid), and a degree of damage. The measuring instrument 11 is of a portable type, and the worker conducts a quality measurement while carrying the management apparatus 10 and the measuring instrument 11. The measuring instrument 11 includes a housing 41 accommodating an arithmetic unit configured to perform processing of nutritional component analysis, a measurement unit (a measurement head) 42 configured to emit and receive measurement light, and a cable 43 extending from the housing 41 to the measurement unit 42. The worker conducts measurement work while holding the measurement unit 42 by hand. The measuring instrument 11 is, for example, a fruit selector (trademark, K-BA800, manufactured by Kubota Corporation).

The measuring instrument 11 includes an analysis unit 45 and a communication unit 44. The analysis unit 45 includes a microcomputer including a processor (an arithmetic processing unit) and a semiconductor memory such as a RAM or a ROM. The measurement unit 42 irradiates a grape with measurement light and receives light which has transmitted through or has been reflected from the grape. The analysis unit 45 acquires a light reception signal from the measurement unit 42 to perform nutritional component analysis. The communication unit 44 has a function of communicating with the management apparatus 10. This communication may be made in a wireless or wired manner. A result of the analysis processing by the analysis unit 45, i.e., quality information is transmitted to the management apparatus 10.

### [Management apparatus 10]

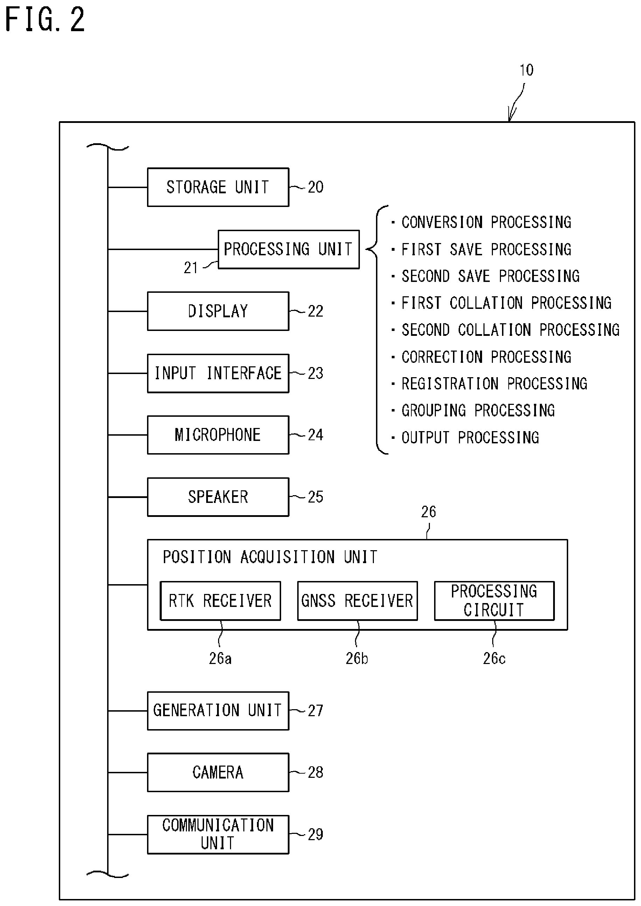

FIG. 2 is a block diagram of the management apparatus 10. The management apparatus 10 includes a processing unit 21 configured to perform information processing for managing quality information of a grape. The processing unit 21 includes a processor (an arithmetic processing unit) in a mobile terminal apparatus such as a smartphone or a tablet terminal. The processing unit 21 executes a computer program to thereby perform each processing.

The computer program is a computer program for causing a computer to operate as the management apparatus 10 configured to perform, using identification information on one or both of a grape and a tree bearing the grape, information processing for managing quality information of the grape.

The management apparatus 10 includes a storage unit 20. The storage unit 20 includes a hard disk, a semiconductor memory, or the like. The storage unit 20 saves the computer program to be executed by the processing unit 21, and other kinds of information.

The management apparatus 10 includes a first input unit and a second input unit. The first input unit is an input interface 23. The input interface 23 is capable of communicating with the measuring instrument 11 in a wireless or wired manner. The input interface 23 acquires quality information measured by the measuring instrument 11.

The second input unit is a microphone 24. The microphone 24 acquires, as an input, a voice uttered by the worker. For example, the microphone 24 acquires, as an input, a voice uttered by the worker in order that the management apparatus 10 may acquire identification information. A signal based on the voice is processed into data by the processing unit 21.

The management apparatus 10 may include a display 22 and a position acquisition unit 26. The display 22 is a display device of the mobile terminal apparatus (the management apparatus 10) (see FIG. 1). The display 22 displays various kinds of data as text information. The display 22 functions as a touch panel through which the worker can input information.

The position acquisition unit 26 is a positioning device configured to acquire a position of the management apparatus 10. The worker conducts quality measurement work while carrying the management apparatus 10 in the vicinity of trees. Therefore, the position acquisition unit 26 is capable of acquiring the work position, i.e., position information of each tree.

The position acquisition unit 26 of the present embodiment performs positioning using a real-time kinematic global navigation satellite system (RTK-GNSS). The position acquisition unit 26 includes an RTK receiver 26a, a GNSS receiver 26b, and a processing circuit 26c.

The GNSS receiver 26b receives satellite signals from a plurality of GNSS satellites, and generates GNSS data based on the satellite signals. In the case of the RTK-GNSS, correction signals transmitted from a reference station are utilized in addition to the satellite signals from the plurality of GNSS satellites. The reference station is placed near the grape farm where the worker conducts measurement work. The reference station generates correction signals in, for example, the format conforming to the Radio Technical Commission for Maritime Services (RTCM), based on the satellite signals from the plurality of GNSS satellites. The RTK receiver 26a receives the correction signals. Using the correction signals, the processing circuit 26c corrects a result of positioning performed by the GNSS receiver 26b. The use of the RTK-GNSS enables positioning with accuracy of an error in a range of several centimeters, for example.

The management apparatus 10 may include an output unit 25, a camera 28, and a communication unit 29. The output unit 25 is a speaker. The speaker 25 outputs by sounds various kinds of information. The processing unit 21 and the like generate various kinds of information, and the speaker 25 outputs the various kinds of information as sound signals. For example, the speaker 25 is capable of outputting, by a sound, identification information generated by the generation unit 27.

The camera 28 is an image capturing device in the management apparatus 10, and is capable of acquiring an image of a grape or an image of a tree. The communication unit 29 is a communication interface for communicating with the server apparatus 12 via the network 13.

### [Specific example of quality management processing]

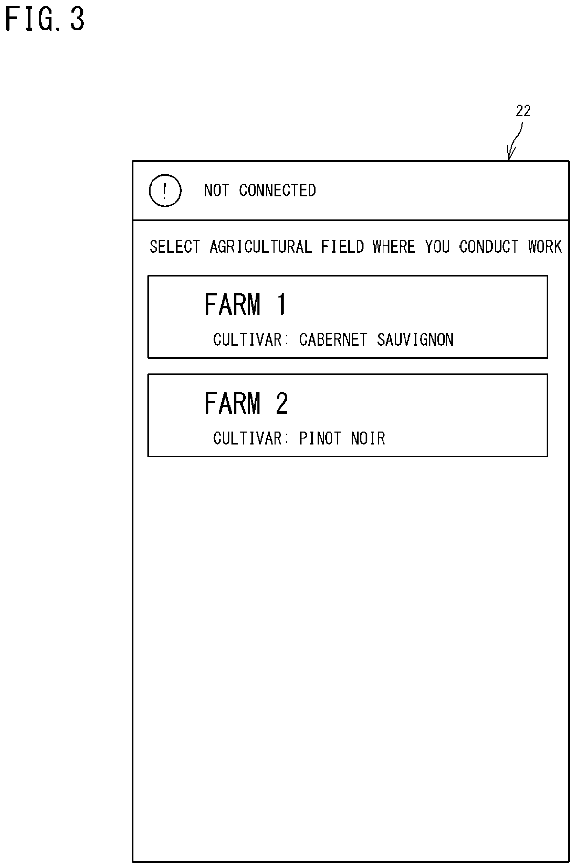

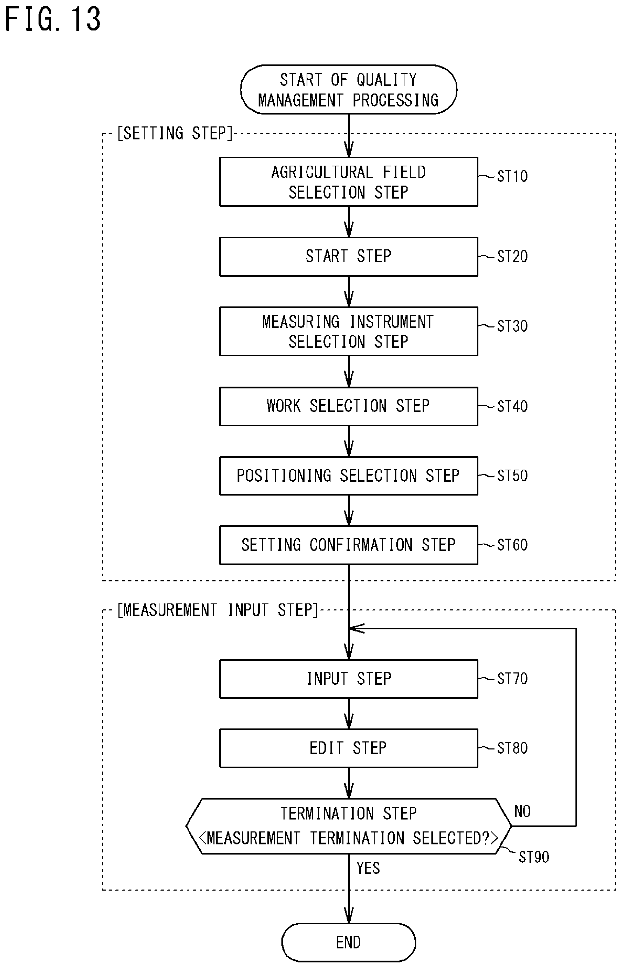

A description is given of the management apparatus 10 having the configuration described above, and quality management processing performed by the management system 7 including the management apparatus 10. FIGs. 3 to 12 are explanatory diagrams of images displayed on the display 22 of the management apparatus 10. The display 22 displays an image by the function of the processing unit 21. The quality management processing is performed by the processing unit 21. FIG. 13 is a flowchart of the quality management processing.

### [Setting step]

As illustrated in FIG. 13, the management apparatus 10 starts the quality management processing in response to a predetermined operation performed by the worker or the like on the management apparatus 10. In the quality management processing, first, the management apparatus 10 carries out an agricultural field selection step ST10. In the agricultural field selection step ST10, the management apparatus 10 displays, on the display 22, a selection screen (farm selection screen) such as that illustrated in FIG. 3. For example, information indicating a farm, such as "Farm 1" or "Farm 2", is displayed on the farm selection screen. In a case where a plurality of farms are displayed on the farm selection screen, at least one of the plurality of farms is acceptable. When the worker selects, by a touch operation or the like, at least one farm from the plurality of farms displayed on the farm selection screen, the management apparatus 10 determines the selected farm as a farm (cultivar) where the worker conducts work.

It should be noted that the farm is associated with a grape cultivar. The information of the farm and the information of the cultivar may be stored in the storage unit 20 of the management apparatus 10 or may be stored in the storage unit 32 of the server apparatus 12. In the present embodiment, the management apparatus 10 receives the information from the server apparatus 12 and displays the information on the farm selection screen.

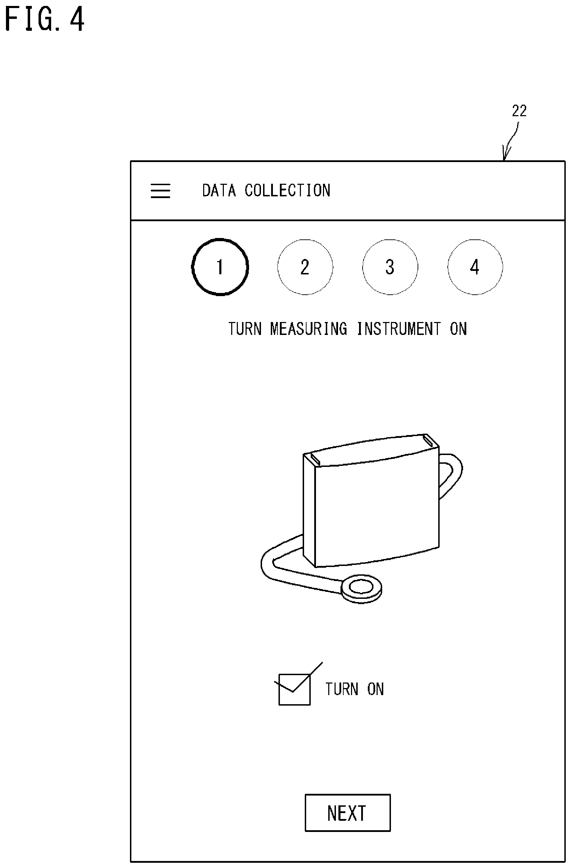

As illustrated in FIG. 13, the management apparatus 10 carries out a start step ST20 subsequent to the agricultural field selection step ST10. In the start step ST20, the management apparatus 10 displays an image for prompting the worker to confirm whether the measuring instrument 11 is turned on, on the display 22 as illustrated in FIG. 4. When the worker checks a checkbox indicating that the measuring instrument 11 has been turned on, on the screen of FIG. 4, the management apparatus 10 terminates the start step ST20, and then carries out a measuring instrument selection step ST30.

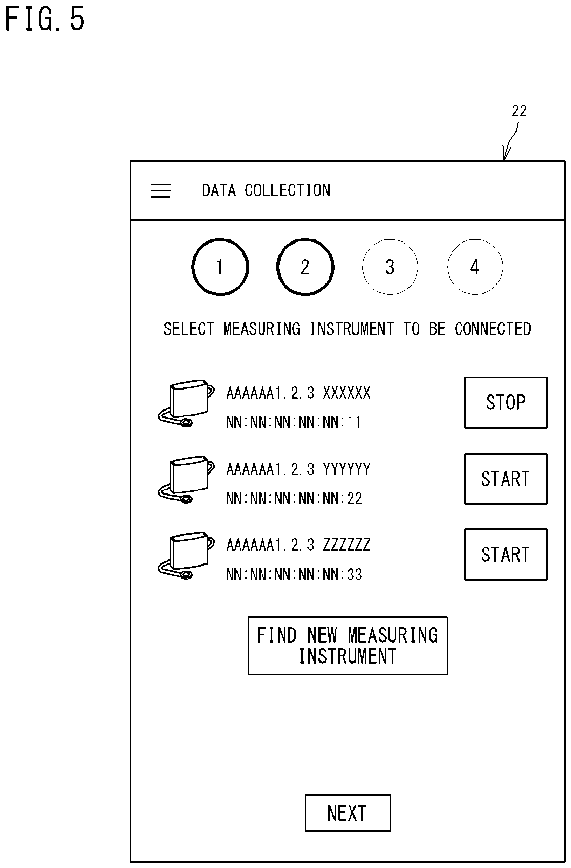

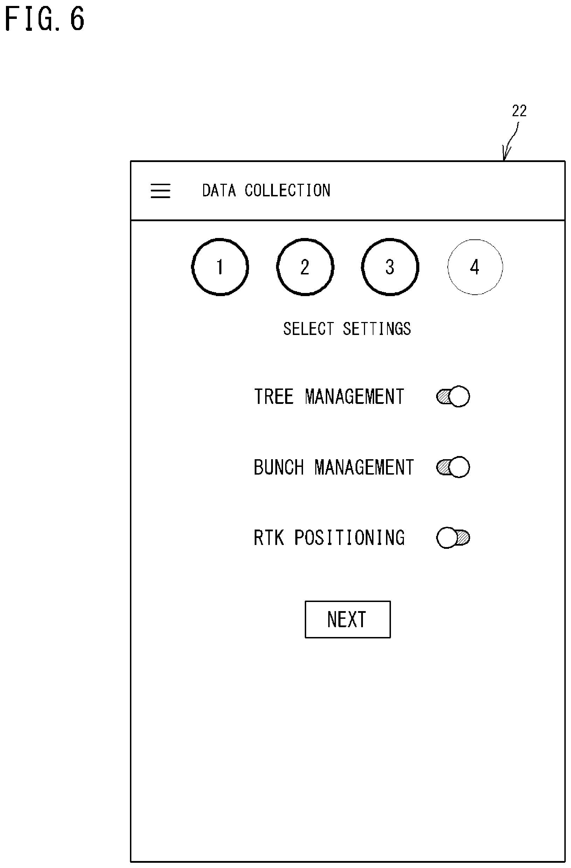

In the measuring instrument selection step ST30, the management apparatus 10 displays, for example, an image for selecting the measuring instrument 11 on the display 22 as illustrated in FIG. 5. The management apparatus 10 displays, for example, an image for selecting one of measuring instruments 11 connectable to the management apparatus 10, on the display 22. When the worker selects a predetermined one of the measuring instruments 11 displayed on the display 22, the management apparatus 10 connects to the selected measuring instrument 11 in order to communicate with the selected measuring instrument 11. When the management apparatus 10 normally connects to the selected measuring instrument 11 so as to communicate with the selected measuring instrument 11, the management apparatus 10 then carries out a work selection step ST40 and a positioning selection step ST50 as illustrated in FIGs. 13 and 6.

In the work selection step ST40 and the positioning selection step ST50, the management apparatus 10 displays an image for selecting a management method as illustrated in FIG. 6. The selection image of FIG. 6 is an image for selecting whether tree management is necessary, whether RTK positioning is necessary (whether positioning using the RTK-GNSS is necessary), and whether bunch (grape) management is necessary. That is, as illustrated in FIG. 6, the management apparatus 10 determines whether management is made for each tree (i.e., whether tree management is necessary) or whether management is made for each bunch (grape) (i.e., whether bunch management is necessary), in the work selection step ST40. As illustrated in FIG. 6, the management apparatus 10 determines whether RTK positioning is performed, in the positioning selection step ST50.

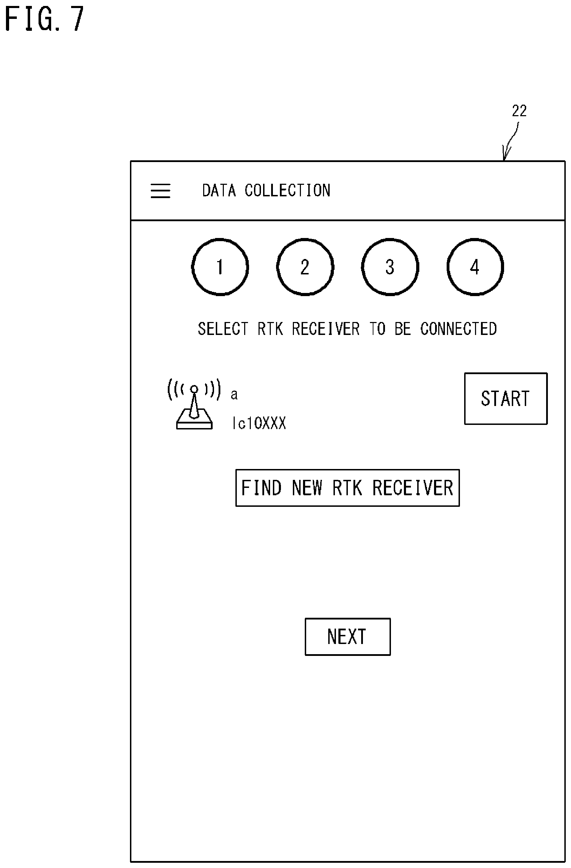

When the RTK positioning is selected in the positioning selection step ST50, the management apparatus 10 displays an image for selecting an RTK receiver serving as the reference station, as illustrated in FIG. 7. Selecting "Start" on the selection image by the worker enables performance of positioning by the RTK-GNSS.

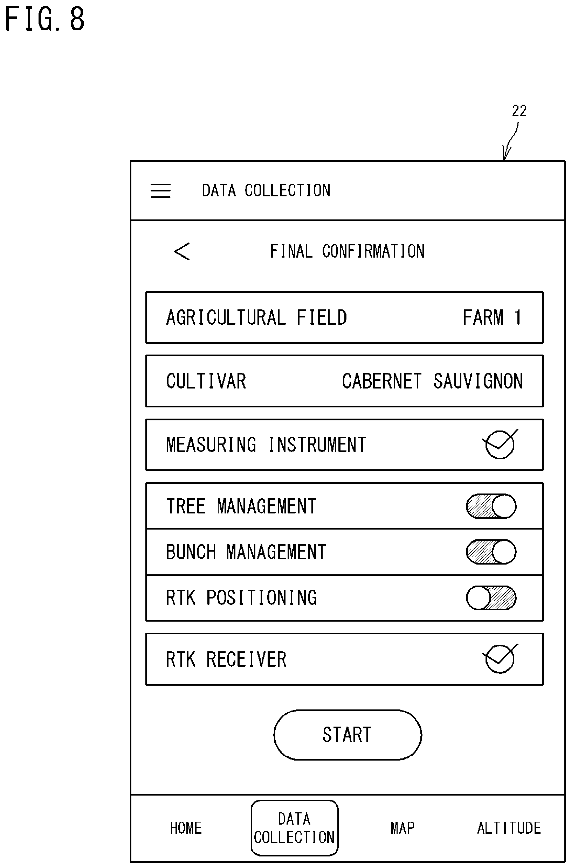

As described above, when the necessity or unnecessity of tree management, the necessity or unnecessity of bunch management, and the necessity or unnecessity of RTK positioning are selected, the management apparatus 10 carries out a setting confirmation step ST60 as illustrated in FIGs. 13 and 8.

FIG. 8 illustrates a setting confirmation image displaying, for confirmation, the items set (selected) in the respective steps described above (agricultural field selection step ST10, start step ST20, measuring instrument selection step ST30, work selection step ST40, positioning selection step ST50). If there is an erroneous item or an item to be corrected, the worker can change the item on this setting confirmation image (setting confirmation step ST60). After the confirmation, the worker selects "Start" on the setting confirmation image. As a result, the management apparatus 10 terminates the setting step and then carries out a measurement input step.

### [Measurement input step]

As illustrated in FIG. 13, the measurement input step includes an input step ST70, an edit step ST80, and a termination step ST90.

In the input step ST70, the worker can input a bunch number (bunch ID) corresponding to identification information of a measurement target grape. In the input step ST70, alternatively, the worker can input, in addition to the bunch number, a tree number (tree ID) corresponding to identification information of a tree bearing the grape having the bunch number. In the input step ST70, additionally, the worker can input quality information obtained using the measuring instrument 11. That is, in the input step ST70, the worker inputs the quality information as well as one or both of the identification information of the grape (bunch), about which the quality information is acquired, and the identification information of the tree bearing the grape.

Specifically, the worker conducts a quality measurement of a grape using the measuring instrument 11. Each time the measuring instrument 11 acquires quality information, the management apparatus 10 (processing unit 21) acquires the quality information. The management apparatus 10 (processing unit 21) also acquires a voice input to the second input unit (microphone 24). When the acquired voice (input voice) is convertible into identification information (bunch ID, tree ID) of a grape, the management apparatus 10 (processing unit 21) converts the input voice into identification information. When the input voice is a voice (activating voice) that instructs the management apparatus 10 (processing unit 21) to perform save processing of saving the quality information, the management apparatus 10 (processing unit 21) performs the save processing. In the save processing, the management apparatus 10 (processing unit 21) performs processing of saving the quality information input to the input interface (first input unit) 23 and the identification information input to the second input unit (microphone 24) in the storage unit (storage device) 20 or the like in association with each other. That is, in the input step ST70, when the management apparatus 10 (processing unit 21) acquires the voice (activating voice) that instructs the management apparatus 10 (processing unit 21) to perform the save processing, the quality information and the identification information are saved in the storage unit (storage device) 20.

In the input step ST70, the determination whether the voice uttered by the worker is the voice (activating voice) that instructs the management apparatus 10 (processing unit 21) to perform the save processing is made based on determination information stored in the storage unit (storage device) 20. The determination information refers to information for determining whether the input voice is the activating voice, and corresponds to voice data or corresponds to a program or data for analyzing the voice.

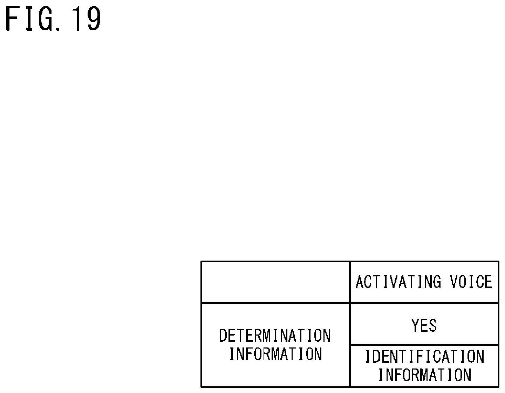

FIG. 19 illustrates exemplary determination information.

As illustrated in FIG. 19, in a case where an utterance "Yes" is recognized as an activating voice, when the input voice is "Yes" (when the worker utters "Yes"), the management apparatus 10 (processing unit 21) determines that the activating voice is acquired. When the input voice is a voice different from "Yes" (when the worker utters something different from "Yes"), the management apparatus 10 (processing unit 21) determines that the activating voice is not acquired. That is, in the case where the utterance "Yes" is recognized as the activating voice, when the voice input to the second input unit (i.e., the input voice) is "Yes", the processing unit 21 determines that the input voice is the voice that instructs the processing unit 21 to perform the save processing. On the other hand, when the voice input to the second input unit (i.e., the input voice) is a voice different from "Yes", the processing unit 21 determines that the input voice is different from the voice that instructs the processing unit 21 to perform the save processing.

As illustrated in FIG. 19, moreover, in a case where the identification information is recognized as the activating voice, when the input voice is a voice corresponding to "identification information" (when the worker utters the identification information), the management apparatus 10 (processing unit 21) determines that the activating voice is acquired. On the other hand, when the input voice is a voice different from the voice corresponding to the identification information (when the worker utters something different from the identification information), the management apparatus 10 (processing unit 21) determines that the activating voice is not acquired. That is, in the case where the identification information is recognized as the activating voice, when the voice input to the second input unit (i.e., the input voice) is the identification information, the processing unit 21 determines that the input voice is the voice that instructs the processing unit 21 to perform the save processing of saving the quality information. On the other hand, when the voice input to the second input unit (i.e., the input voice) is a voice different from the voice corresponding to the identification information, the processing unit 21 determines that the input voice is different from the voice that instructs the processing unit 21 to perform the save processing.

It should be noted that whether the activating voice is "Yes" or the identification information is incorporated as a program in the management apparatus 10. The utterance "Yes" or the identification information can be set for the activating voice by operating the management apparatus 10. In the foregoing embodiment, the utterance "Yes" or the identification information (i.e., the voice corresponding to the identification information) is set for the activating voice. However, the activating voice is not limited to the utterance "Yes" and the identification information, and other voices may be set for the activating voice.

In the save processing, the management apparatus 10 (processing unit 21) saves the quality information input to the input interface (first input unit) 23 and the identification information input to the second input unit (microphone 24) in the storage unit (storage device) 20 or the like in association with each other.

The quality information and the identification information may be saved in a database disposed in the server apparatus 12. The database may be a first database 35 or a second database 36 described later (see FIG. 1).

For convenience of the description, information including quality information and identification information associated with each other is also referred to as "associated information" below. A grape about which quality information is acquired is referred to as a "measurement target grape (measurement target fruit)". A tree bearing the measurement target grape is referred to as a "measurement target tree".

The quality information may be saved for each measurement target grape or may be saved for each measurement target tree bearing the measurement target grape. The quality information may be associated with only the identification information of the measurement target grape. Alternatively, the quality information may be associated with only the identification information of the measurement target tree. Still alternatively, the quality information may be associated with both of the identification information of the measurement target grape and the identification information of the measurement target tree.

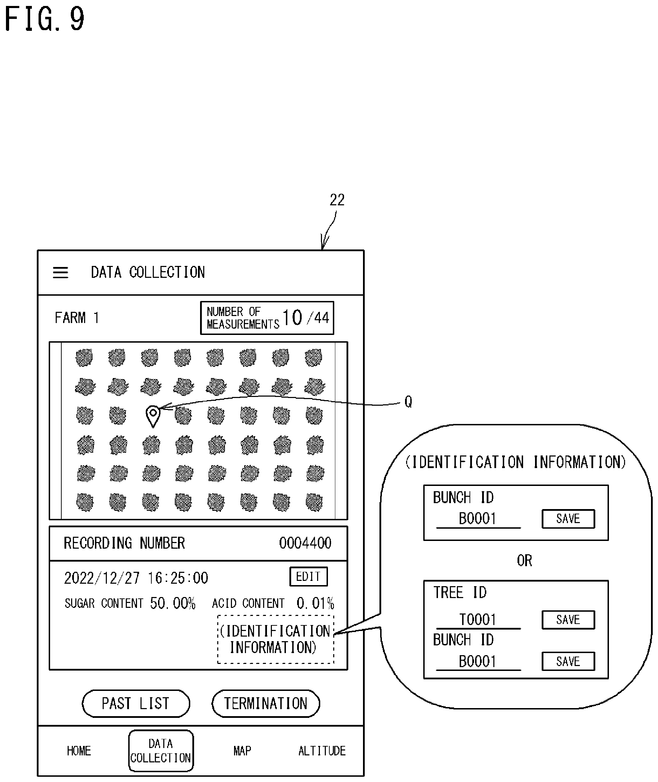

FIG. 9 illustrates exemplary display on the display 22 in the input step ST70.

As illustrated in FIG. 9, the display 22 displays a map of the farm selected in the agricultural field selection step ST10 or a map of a part of the farm. A measurement position Q acquired by the position acquisition unit 26 is displayed on the map. The display 22 also displays, for example, the number of measurements, a recording number, a measurement date and time, and quality information corresponding to a measurement value obtained from a measurement by the measuring instrument 11. In the example of FIG. 9, the quality information includes a value of a sugar content and a value of an acid content (total amount of organic acid). As illustrated in FIG. 9, the display 22 also displays, for example, identification information (bunch ID, tree ID) of a grape. In FIG. 9, an identification information input image is illustrated outside the display 22. This is for the sake of illustration. In practice, the identification information input image is displayed on the display 22.

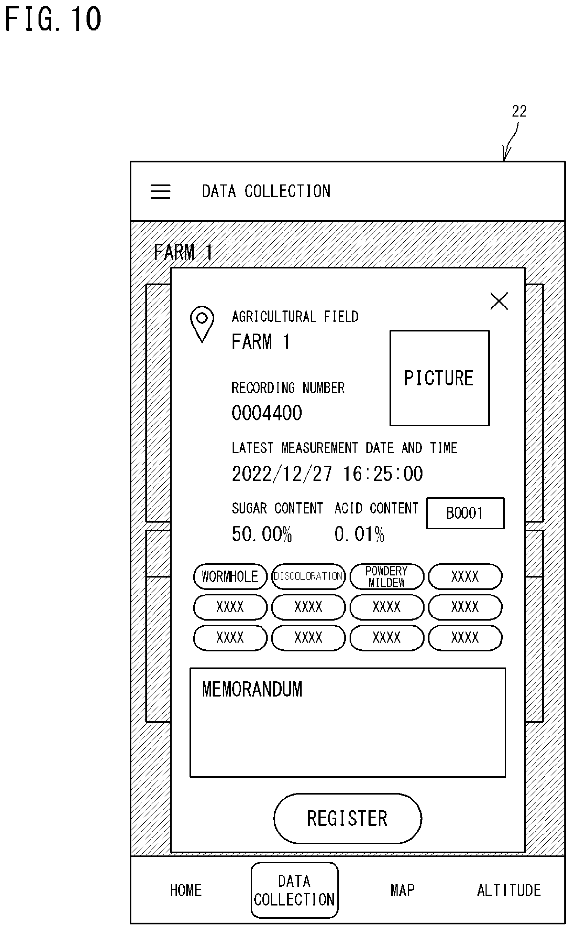

As described above, after termination of the save processing of associating the quality information and the identification information with each other, i.e., after saving the associated information, a registration image is displayed on the display 22 as illustrated in FIG. 10. FIG. 10 illustrates the registration image. The registration image includes the identification information ("B0001" in the example of FIG. 10) and the quality information (value of sugar content, value of acid content), which are associated with each other. The identification information and the quality information are displayed as text information.

The associated information is also saved in association with information of a date and time of measurement work using the measuring instrument 11, and information of a measurement position. The information of the date and time is acquired by a clock function of the management apparatus 10. The measurement position is acquired by the position acquisition unit 26.

In the registration image, other kinds of information on the measurement target grape or the measurement target tree are also inputtable. The other kinds of information are defined as additional information. As illustrated in FIG. 10, detailed information on the measurement target grape, such as "Wormhole", "Discoloration", and "Disease name (powdery mildew)", is inputtable as the additional information. Tasting evaluation information by the worker (skilled worker) may be input as the additional information. For example, the additional information is inputtable to a "Memorandum" field in FIG. 10. One or both of an image (picture) of the measurement target grape and an image (picture) of the measurement target tree are also inputtable as the additional information. The images are acquired by the camera 28.

As described above, in the input step, the management apparatus 10 further saves one or both of the additional information of the grape and the additional information of the tree bearing the grape in association with the associated information including the identification information and the quality information associated with each other. The worker manually inputs the additional information to the display 22. The additional information is saved in the management apparatus 10 or the server apparatus 12 in association with the associated information.

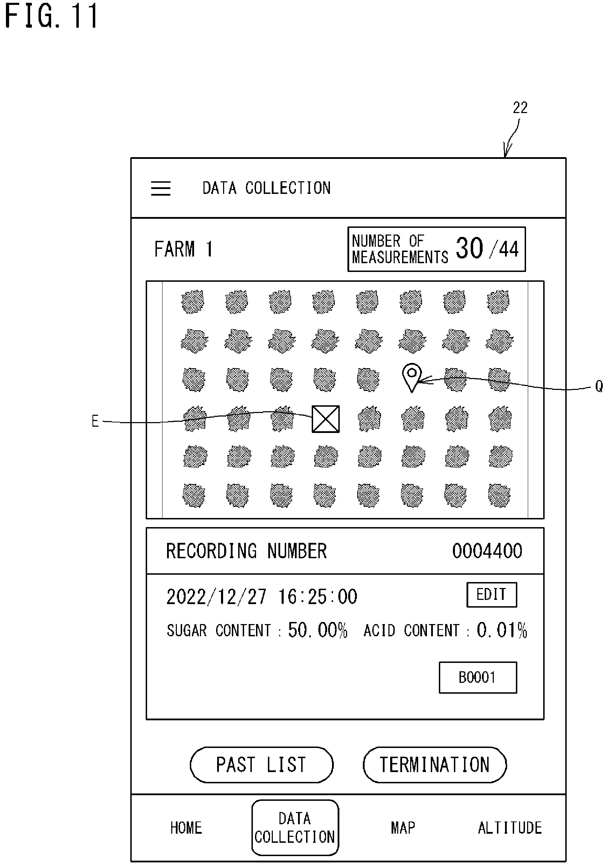

As illustrated in FIG. 10, when the worker selects "Register" (registration button) displayed on the display 22, the management apparatus 10 carries out the edit step ST80 subsequent to the input step ST70. FIG. 11 illustrates an example of the display 22 in the edit step ST80. As illustrated in FIG. 11, the next measurement image includes an "Edit" image. By selecting "Edit", the worker can perform edit processing of editing the various kinds of information that have already been registered (saved).

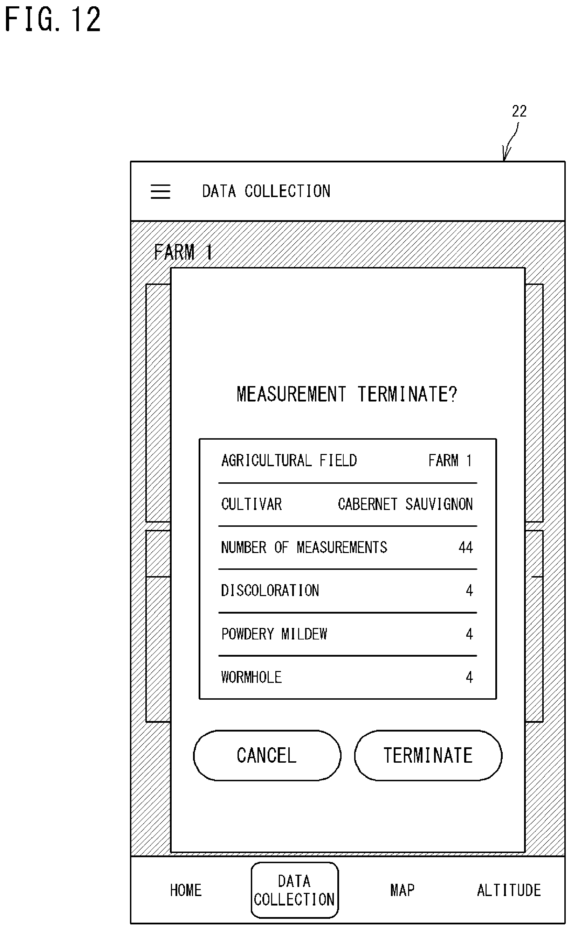

FIG. 11 illustrates a measurement screen including a map of the farm or a map of a part of the farm. A measurement position Q acquired by the position acquisition unit 26 of the management apparatus 10 is displayed on the map. In addition, when the worker fails to input a measurement result or the like, a measurement position E, where the worker fails to conduct a measurement, is displayed on the plan view image. As illustrated in FIG. 11, when the worker selects "Termination" (termination button) displayed on the display 22, a measurement termination image is displayed (termination step ST90). FIG. 12 illustrates a termination image. When the worker selects "Terminate" in the termination image (i.e., in the case of the Yes branch in the termination step of FIG. 13), the measurement terminates.

The input step (ST70 of FIG. 13) and the subsequent steps are carried out repeatedly until the worker selects "Terminate" (i.e., in the case of the No branch in the termination step of FIG. 13).

### [Input step]

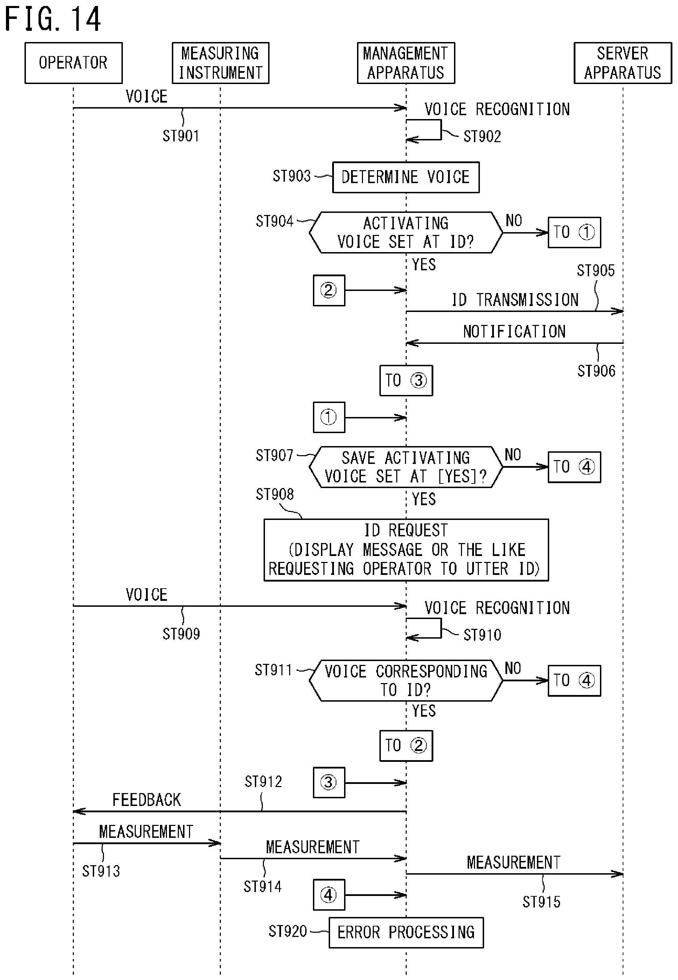

FIG. 14 is a flowchart (operation flow diagram) of the input step. The operation flow of FIG. 14 is described on the assumption that the activating voice is set at the identification information (bunch ID, tree ID) of the grape or the utterance "Yes".

When the worker utters (ST901 of FIG. 14), the microphone 24 of the management apparatus 10 acquires the voice (input voice), and the processing unit 21 of the management apparatus 10 performs voice recognition processing (ST902 of FIG. 14).

In ST902 of FIG. 14, when the input voice is convertible into identification information, for example, when the voice is convertible into symbols, alphanumeric characters, and the like and the converted data is not a word, the processing unit 21 converts the input voice into identification information (data of identification information). When the voice is convertible into a character string represented by at least one of symbols and alphanumeric characters and the character string is distinguishable from a word, the processing unit 21 determines that the voice is convertible into identification information and converts the voice into identification information. For example, when the converted voice (conversion data) is represented as "KUBOTA", the processing unit 21 determines that although the conversion data corresponds to a character string, the entire character string is a word recognized as a last name; therefore, the converted data is not convertible into identification information.

On the other hand, for example, when the converted voice (conversion data) is represented as "KUBOTA1221", the processing unit 21 determines that although the conversion data corresponds to a character string, "1221" is distinguishable from a word; therefore, the converted data is convertible into identification information. The processing unit 21 thus converts the voice into identification information.

Also in ST902 of FIG. 14, the processing unit 21 executes a voice recognition program (voice recognition processing) or the like, thereby converting the input voice into identification information (data of identification information). Also in ST902 of FIG. 14, even when the input voice is different from identification information, the processing unit 21 may execute the voice recognition program (voice recognition processing) or the like, thereby converting the input voice into data (data different from identification information).

Next, the processing unit 21 determines whether the input voice (converted data) is an activating voice (ST903, ST904 of FIG. 14).

The processing unit 21 refers to the determination information stored in the storage unit (storage device) 20 (ST903), and determines whether the activating voice is set at a voice corresponding to the identification information (bunch ID, tree ID) of the grape (ST904 of FIG. 14).

When the input voice is the identification information and the activating voice is set at the voice corresponding to the identification information (Yes in ST904 of FIG. 14), the processing unit 21 transmits the identification information to the server apparatus 12 via the communication unit 29 (ST905). The server apparatus 12 provides a notification about reception confirmation (ST906 of FIG. 14).

That is, when the worker utters the voice corresponding to the identification information in ST901 of FIG. 14 and the voice corresponding to the identification information is set at the activating voice (Yes in ST904 of FIG. 14), the processing unit 21 then transmits the identification information to the server apparatus 12 via the communication unit 29 (ST905).

On the other hand, when the activating voice is not set at the voice corresponding to the identification information (bunch ID, tree ID) of the grape (No in ST904 of FIG. 14), the processing unit 21 determines whether the activating voice is set at the voice corresponding to "Yes" (ST907 of FIG. 14). When the input voice is "Yes" and is the activating voice (Yes in ST907 of FIG. 14), the processing unit 21 performs processing of prompting the worker or the like to generate the identification information with a voice (ST908 of FIG. 14). In ST908 of FIG. 14, the processing unit 21 performs, for example, processing of causing the display 22 illustrated in FIG. 9 to display a text message "Utter identification information." or causing the speaker 25 of the management apparatus 10 to output an audio message "Utter identification information.".

When the worker utters (ST909 of FIG. 14), the microphone 24 of the management apparatus 10 acquires the voice (input voice), and the processing unit 21 of the management apparatus 10 performs voice recognition processing (ST910 of FIG. 14), as with ST902 of FIG. 14. The processing unit 21 determines whether the input voice acquired in ST910 of FIG. 14 is the identification information (bunch ID, tree ID) of the grape (ST911 of FIG. 14). When the processing unit 21 determines that the input voice is the identification information through the voice recognition processing (Yes in ST911 of FIG. 14), the processing unit 21 then transmits the identification information to the server apparatus 12 via the communication unit 29 (ST905). The server apparatus 12 provides a notification about reception confirmation (ST906 of FIG. 14).

That is, as described in ST902, ST903, ST904-No, and ST907 to ST911, in a case where the processing unit 21 acquires the activating voice "Yes" and the voice different from the activating voice (i.e., the identification information), when the voice different from the activating voice "Yes" (i.e., the identification information) is convertible into identification information, the processing unit 21 converts a voice different from the voice that instructs the processing unit 21 to perform the save processing (i.e., another voice) into identification information, in the save processing.

When the input voice generated in ST901 of FIG. 14 is different from "Yes" set at the activating voice (No in ST907 of FIG. 14), i.e., when the input voice is different from the activating voice (the voice that instructs the processing unit 21 to perform the save processing of saving the quality information), the processing unit 21 performs error processing (correction processing) (ST920 of FIG. 14).

In the error processing (correction processing), the processing unit 21 does not start the save processing, but performs the correction processing of causing the worker to input a voice through the microphone 24. In the correction processing, for example, the processing unit 21 causes the display 22 illustrated in FIG. 9 to display a text message "Save processing is disabled." or causes the speaker 25 of the management apparatus 10 to output an audio message "Save processing is disabled.". In the correction processing, for example, the processing unit 21 causes the display 22 illustrated in FIG. 9 to display a text message "Utter identification information." or causes the speaker 25 of the management apparatus 10 to output an audio message "Utter identification information.". Thereafter, the processing unit 21 waits for input of a voice from the worker, i.e., voice input. When the worker utters a voice (ST901), the processing returns to ST902, and the processing unit 21 performs the processing in and subsequent to ST902.

When the processing unit 21 receives the notification about reception confirmation from the server apparatus 12 (ST906 of FIG. 14), the processing unit 21 then displays the conversion data as text information on the display 22. That is, the data subjected to the conversion processing is used as the identification information, and the display 22 displays the identification information as the text information. The worker can confirm on the display 22 that the identification information has been input accurately (ST912 of FIG. 14). In addition to or in place of displaying the identification information on the display 22, a sound for confirmation of the identification information may be output from the speaker 25. For example, the identification information is output by a sound from the speaker 25.

The worker uses the measuring instrument 11 to conduct a quality measurement of the grape having the identification information (ST913). The management apparatus 10 acquires quality information as a result of the quality measurement (ST914). The processing unit 21 terminates the save processing of saving the quality information and the identification information in association with each other.

In the present embodiment, the server apparatus 12 saves the associated information including the quality information and the identification information associated with each other. Therefore, the processing unit 21 performs save request processing for the server apparatus 12, as the save processing, in conjunction with quality information transmission processing (ST915 of FIG. 14). Then, the server apparatus 12 saves in the database the associated information including the quality information and the identification information associated with each other.

In the sequence diagram illustrated in FIG. 14, the quality measurement of the grape using the measuring instrument 11 is conducted after utterance of the identification information. Alternatively, the quality measurement of the grape using the measuring instrument 11 may be conducted before utterance of the identification information.

If the quality measurement is conducted first, the processing unit 21 may perform the save request processing for the server apparatus 12, as the save processing, in conjunction with identification information transmission processing.

The management apparatus 10 may associate the quality information and the identification information with each other. Alternatively, the server apparatus 12 may associate the quality information and the identification information with each other. In a case where the management apparatus 10 associates the quality information and the identification information with each other, the management apparatus 10 performs the save request processing for the server apparatus 12, as the save processing, in conjunction with associated information transmission processing.

As described above, in the voice recognition processing illustrated in FIG. 14, the microphone 24 acquires, as an input, the voice uttered by the worker in order that the management apparatus 10 may acquire the identification information. The processing unit 21 converts the voice into data processable by the processing unit 21 (conversion processing). The processing unit 21 performs, in response to input of the activating voice, the save processing of saving the identification information and the quality information in association with each other.

As described above, the worker utters identification information at the timing when conducting the quality measurement of the grape using the measuring instrument 11. The processing unit 21 performs the conversion processing to convert the identification information (voice) into data processable by the processing unit 21. The identification information converted into the data and the quality information obtained by the measuring instrument 11 are stored in association with each other.

If the worker fails in the voice input, the worker may manually input the identification information through the display 22.

### [Another means for acquiring identification information]

A description is given of another means by which the management apparatus 10 performs the voice recognition processing to acquire identification information.

According to the first means illustrated in FIG. 14, the worker utters identification information, and the management apparatus 10 performs the conversion processing to digitize the identification information (i.e., to transform the identification information into a text).

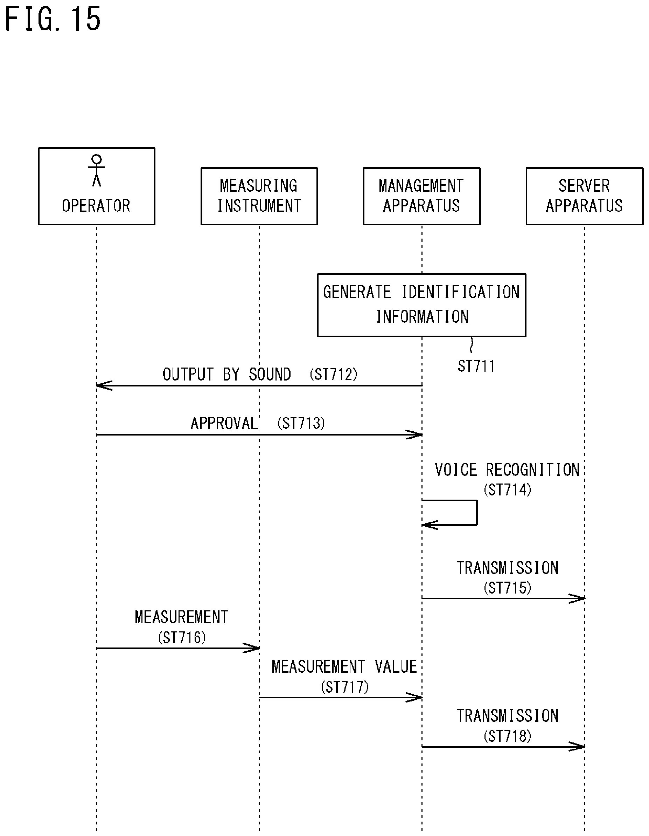

FIG. 15 is a sequence diagram illustrating another means (second means) of the voice recognition processing. According to the second means, the management apparatus 10 generates identification information (ST711), and outputs by a sound the identification information (ST712).

The worker listens to the sound (i.e., the output sound) and then utters a voice for approval (ST713). The processing unit 21 performs the voice recognition processing to convert the utterance (voice) into data processable by the processing unit 21 (ST714).

The generation unit 27 of the management apparatus 10 operates for the second means. The generation unit 27 generates identification information (ST711). For example, the generation unit 27 generates, as identification information, numbers 0001, 0002, 0003, ... in ascending order. The speaker 25 outputs by a sound the generated identification information (ST712). For example, the first identification information "0001" is output by a sound. The worker utters a voice as a response to the output sound.

It should be noted that the management apparatus 10 does not generate identification information (ST711), but identification information may be output by a sound in accordance with a list of existing identification information (i.e., list information) given to the management apparatus 10.

After the speaker 25 outputs the identification information "0001" by a sound, the microphone 24 acquires a response to the output sound, i.e., a voice uttered by the worker (ST713). As described above, the worker listens to the identification information "0001" output by a sound from the speaker 25, and utters a response to the output sound, i.e., a voice for approving the identification information. For example, the worker utters "OK". The microphone 24 acquires the sound "OK" as an input.

The processing unit 21 performs the conversion processing to convert the voice "OK" uttered by the worker into data processable by the processing unit 21. The processing unit 21 thus recognizes that the identification information "0001" is approved (ST714).

The processing unit 21 performs the save processing of saving the identification information "0001", which is generated by the generation unit 27 and output by a sound from the speaker 25, and the quality information in association with each other, using the input "OK" through the microphone 24, as a condition.

Acquiring the quality information by the management apparatus 10 (ST716, ST717) and transmitting the information to the server apparatus 12 (ST718) are the same as those by the first means; therefore, the description thereof is omitted.

According to the second means, as with the first means, the quality measurement of the grape using the measuring instrument 11 may be conducted before utterance of a voice for approving identification information or may be conducted after utterance of the voice for approving the identification information.

### [First collation processing]

In the measurement input step illustrated in FIG. 13, the processing unit 21 may further perform first collation processing. The first collation processing is processing of collating identification information acquired by voice recognition with the database 35 in which identification information is previously accumulated. The first collation processing is performed for saving quality information in correct association with identification information. Although the first collation processing in the case of the first means (FIG. 14) is described, the first collation processing is also applicable to the second means (FIG. 15).

For the first collation processing, the server apparatus 12 includes the database 35 (first database 35) in which identification information is previously accumulated. Specifically, the storage unit 32 includes the database 35 (see FIG. 1). A grape and a tree bearing the grape have already been managed for each farm. The database 35 stores identification information of the grape and identification information of the tree.

Some grapes and some trees are set previously, one or both of which are subjected to quality measurements by the worker. This setting is based on "measurement task information". The measurement task information is information indicating a grape measurement task (measurement item) using the measuring instrument 11. The measurement task includes identification information of, for example, a grape to be subjected to a quality measurement. The measurement task information is provided to the management apparatus 10, and is displayed on the display 22. The worker conducts a quality measurement of a measurement target grape, based on this measurement task information. The identification information included in the measurement task information is previously registered in the database 35.

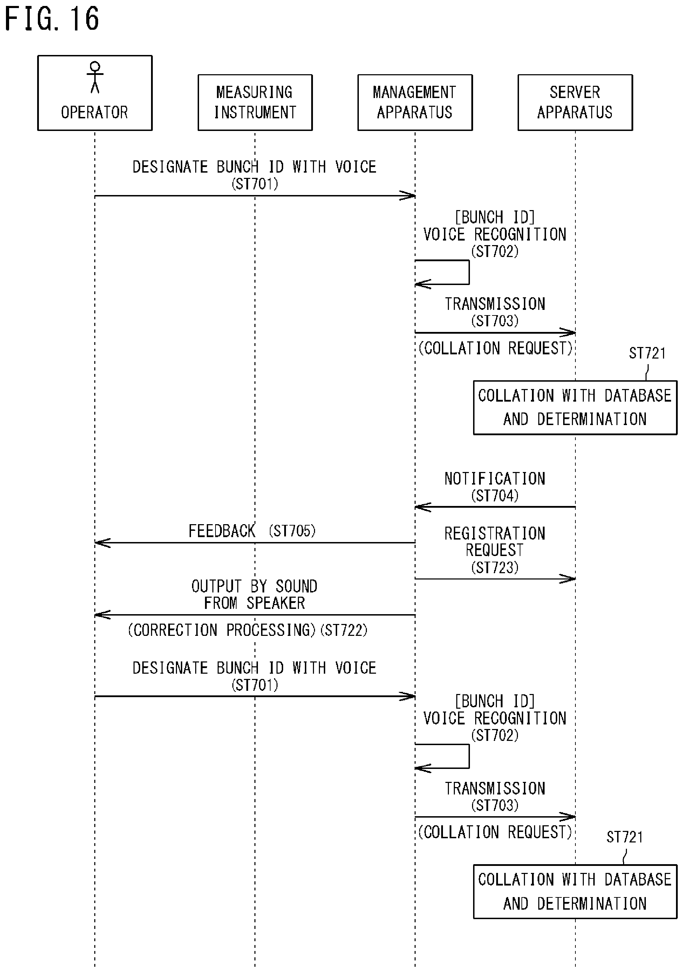

FIG. 16 is a sequence diagram of the voice recognition processing including the first collation processing. When the worker conducts measurement work based on the measurement task information, the processing unit 21 acquires, as identification information, data obtained by converting a worker's voice (ST702), as with the processing illustrated in FIG. 14. The processing unit 21 performs the first collation processing of collating the identification information based on the data (conversion data) with the database 35.

Since the server apparatus 12 includes the database 35, the processing unit 21 performs collation request processing for the server apparatus 12, as the first collation processing, in conjunction with processing of transmitting the identification information based on the conversion data (ST703).

The server apparatus 12 collates the identification information acquired from the management apparatus 10 with the identification information registered in the database 35, and determines whether the identification information is registered in the database 35 (ST721). The server apparatus 12 notifies the management apparatus 10 of a result of the collation (ST704).

When the identification information based on the conversion data is registered in the database 35, a result of the first collation processing is positive. When the result of the first collation processing is positive, the processing unit 21 starts the save processing, as with the processing illustrated in FIG. 14. Specifically, the processing unit 21 performs the save request processing for the server apparatus 12, as the save processing, in conjunction with processing of transmitting associated information (ST723). Then, the server apparatus 12 saves in the database the associated information including the quality information and the identification information associated with each other.

As described above, when the identification information of the grape to be subjected to the quality measurement is extracted from the identification information registered in the database 35, the grape having the extracted identification information is measured, so that the quality information is saved in correct association with the identification information.

On the other hand, as a result of the collation and determination (ST721), when the identification information based on the conversion data is not registered in the database 35, the result of the first collation processing is negative.

In this case, the processing unit 21 does not start the save processing, but performs the correction processing of causing the worker to input a voice through the microphone 24 (ST722). The processing unit 21 performs, as the correction processing, processing of causing the speaker 25 to output, by a sound, information that prompts the worker to utter the identification information. For example, the speaker 25 outputs an audio message "That identification information is not registered. Try again.".

The microphone 24 waits for voice input. The worker then utters the identification information of the grape, and the microphone 24 of the management apparatus 10 acquires the voice (ST701). The processing unit 21 acquires data obtained by converting the voice, as identification information again (ST702). The processing unit 21 performs the first collation processing of collating the identification information based on the data (conversion data) with the database 35.

According to the measurement input step including the first collation processing, the worker has an opportunity to utter identification information again. As a result, an error in quality management is prevented. When the result of the first collation processing is negative, the worker can make a retry quickly.

### [Registration processing]

The management apparatus 10 has a function of adding new identification information to the database 35.

When a grape and a tree to be subjected to quality management are newly set, new identification information can be registered in the database 35. For example, when identification information not registered in the database 35 is transmitted from the management apparatus 10 as the result of the first collation processing (ST703 of FIG. 16) and the management apparatus 10 receives a negative notification as the result of the collation and determination (ST721), the processing unit 21 performs registration processing of newly registering the identification information in the database 35 (ST723 of FIG. 16).

That is, the processing unit 21 performs the registration processing of registering the identification information based on the conversion data in the database 35. Since the server apparatus 12 includes the database 35, the registration processing is the registration request processing. According to the registration processing, the database 35 can be enriched.

### [Grouping processing]

In the measurement input step illustrated in FIG. 13, the processing unit 21 may further perform grouping processing. The grouping processing is processing of grouping multiple pieces of associated information satisfying predetermined conditions. Although the grouping processing in the case of the first means (FIG. 14) is described, the grouping processing is also applicable to the second means (FIG. 15).

As described above (see FIG. 2), the management apparatus 10 includes the position acquisition unit 26 configured to acquire position information indicating a position where a measurement is conducted using the measuring instrument 11. The position information is information indicating a position at which measurement work is conducted. The worker carrying the management apparatus 10 conducts work in the vicinity of a tree. Therefore, the management apparatus 10 uses the acquired position information as position information of the tree.

In the measurement input step, the processing unit 21 stores, in the server apparatus 12, associated information including identification information acquired based on a worker's utterance and quality information acquired by the measuring instrument 11, the identification information and the quality information being associated with each other. The grouping processing is processing of grouping the associated information, based on the position information at this time.

The grouping processing is described in detail.

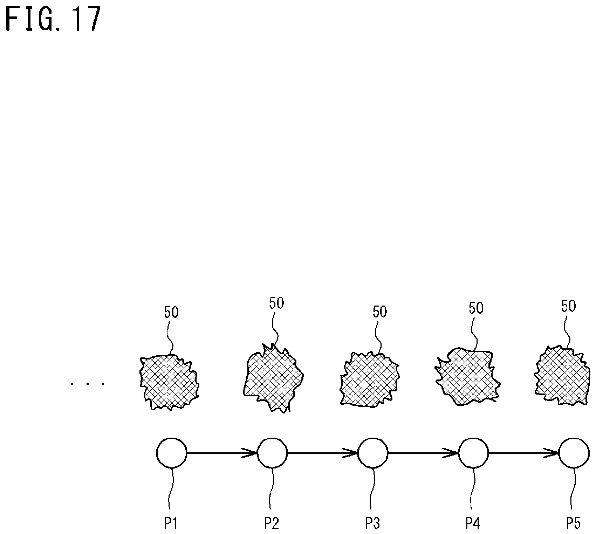

In the present embodiment, a fruit to be subjected to a quality measurement is a grape. On a farm, trees bearing grapes are often aligned in a row. FIG. 17 is an explanatory diagram illustrating trees 50 aligned in a row, and measurement positions Pn (n = 1, 2, 3, ...) of the respective trees 50 (grapes).

When acquiring quality information of each grape from the measuring instrument 11, the processing unit 21 acquires position information indicating a position where a quality measurement of the grape is conducted, from the position acquisition unit 26.

The worker conducts a measurement of one of the trees 50 bearing grapes, and then moves to an adjacent one of the trees 50 bearing grapes and conducts a measurement of the adjacent tree 50. The worker conducts a measurement for each tree. In this case, as illustrated in FIG. 17, measurement positions represented by position information Pn acquired by the management apparatus 10 are arranged in a row as with the row of the trees 50 subjected to the measurements. In a case where the trees 50 are linearly aligned in a row, the measurement positions represented by the acquired position information are arranged linearly in plan view of the farm.

Hence, the processing unit 21 performs, as the grouping processing, processing of adding row identification information indicating a row, to the associated information on the trees 50 whose measurement positions Pn are arranged in one direction.

In the case where the plurality of trees 50 are aligned in a row, the management apparatus 10 can estimate that these trees 50 are aligned in a row. Therefore, the management apparatus 10 can automatically group the associated information of the trees 50 included in the row. In the present embodiment, since the plurality of trees 50 are linearly aligned in a row, row identification information is provided to the trees. As a result, the trees can be managed on a row (group) basis.

### [Measurement task information output processing]

In the measurement input step illustrated in FIG. 13, the processing unit 21 may further perform output processing of outputting measurement task information. The measurement task information is information indicating a grape measurement task using the measuring instrument 11. The measurement task information may be, for example, identification information of a measurement target grape or identification information of a tree. For example, the output processing is performed before the input step (ST70 of FIG. 13) each time the input step is carried out.

In the present embodiment, the processing unit 21 performs the output processing of outputting, as the measurement task information, identification information of a target tree which is a tree bearing a grape to be subjected to a measurement. The output of the measurement task information may be one or both of an audio output from the speaker 25 and a character output on the display 22.

According to the output processing, since the worker is guided in accordance with the output information, the worker can sequentially measure the trees bearing the grapes to be subjected to the measurements. This configuration facilitates the work. It should be noted that the measurement task information indicating the measurement task may be information different from the identification information. For example, the measurement task information may be information indicating the contents (procedure) of the work for measurement. According to the output processing, the management apparatus 10 can guide the worker so as to prevent the worker from making a mistake in measurement procedure or unintentionally omitting to conduct a measurement.

A description is given of use of the measurement task information output processing.

For the use, as described above (see FIG. 2), the management apparatus 10 includes the position acquisition unit 26 configured to acquire position information indicating a position where a measurement is conducted using the measuring instrument 11. In addition, the management apparatus 10 may refer to the database 36 (second database 36) in which position information of a tree is previously accumulated. In the present embodiment, the server apparatus 12 includes the database 36 (second database 36). The database 36 (second database 36) and the first database 35 may be provided in common.

The position information of the tree saved in the database 36 is previously acquired by an agricultural machine such as a tractor. The agricultural machine includes a camera, a positioning device based on the RTK-GNSS or the like, a light detection and ranging (LiDAR) device, and the like. Using these devices, a tree can be specified, and position information of the specified tree can be acquired. The acquired position information of the tree is saved in the database 36.

In the measurement input step illustrated in FIG. 13, as described above, the processing unit 21 stores, in the server apparatus 12, associated information including identification information acquired based on a worker's utterance and quality information acquired by the measuring instrument 11, the identification information and the quality information being associated with each other.

In acquiring quality information, i.e., in conducting a quality measurement, the processing unit 21 acquires, from the position acquisition unit 26, position information indicating a position where the quality measurement is conducted using the measuring instrument 11. The position information is information indicating a position at which measurement work is conducted. The worker carrying the management apparatus 10 and the measuring instrument 11 conducts work in the vicinity of a tree. Therefore, the processing unit 21 can use the acquired position information as position information of the tree.

The processing unit 21 performs processing of collating the position information acquired by the position acquisition unit 26 with the database 36. This processing is second collation processing. The second collation processing is tree collation processing of collating a tree bearing a grape subjected to a quality measurement with a tree registered in the database 36.

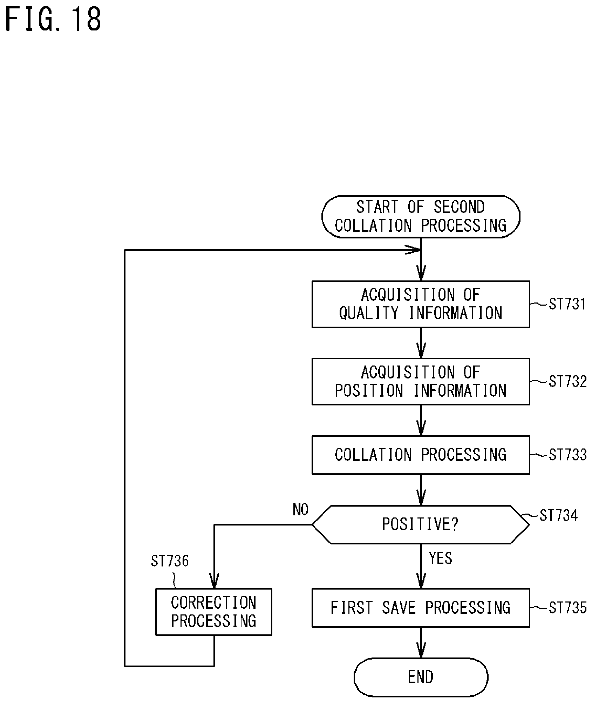

FIG. 18 is a flowchart of the second collation processing.

The worker conducts a measurement of a grape on a tree, using the measuring instrument 11, and the processing unit 21 acquires quality information as a result of the measurement (ST731). In the present embodiment, the worker conducts a measurement of the grape on the tree indicated by the measurement task information.

In addition, the processing unit 21 acquires, from the position acquisition unit 26, the position at which the measurement work is conducted, i.e., the position information of the measured tree (ST732).

The processing unit 21 performs, as the second collation processing, processing of collating the position information of the tree acquired by the position acquisition unit 26 in the measurement, with the position information of the tree accumulated in the database 36 (ST733).

The target tree indicated by the measurement task information is extracted from the trees previously accumulated in the database 36. Therefore, among the trees accumulated in the database 36, the target tree indicated by the measurement task information is subjected to the foregoing collation processing.

When a result of the second collation processing is positive (Yes in ST734), the processing unit 21 starts the save processing (ST735). Specifically, the processing unit 21 performs the save request processing for the server apparatus 12, as the save processing, in conjunction with the associated information transmission processing. Then, the server apparatus 12 saves in the database the associated information including the quality information and the identification information associated with each other.

As a result, the quality information of the grape on the target tree indicated by the measurement task information is actually acquired, and the quality information is saved in correct association with the identification information of the target tree.

On the other hand, if the worker erroneously measures a tree different from the target tree indicated by the measurement task information, using the measuring instrument 11, i.e., if a tree actually measured using the measuring instrument 11 is different from the target tree indicated by the measurement task information, the result of the second collation processing is negative (No in ST734). When the result of the second collation processing is negative, the processing unit 21 does not start the save processing, but performs the correction processing of causing the worker to input a voice through the microphone 24 (ST736).

The processing unit 21 performs, as the correction processing, the processing of causing the speaker 25 to output, by a sound, information that prompts the worker to perform a measurement using measuring instrument 11 (i.e., to make a retry), for example. The worker has an opportunity to conduct a measurement using the measuring instrument 11 again. The worker confirms the target tree indicated by the measurement task information, and conducts a measurement of the target tree, using the measuring instrument 11 again. As a result, an error in quality management is prevented.

According to the second collation processing, the worker can conduct measurement work of the target tree indicated by the measurement task information, without errors.

### [Management apparatus 10 of the present embodiment]

As described above, the management apparatus 10 of the present embodiment includes the processing unit 21 configured to perform information processing for managing, using one or both of identification information on a grape (fruit) and identification information on a tree bearing the grape, quality information of the grape. The management apparatus 10 also includes the input interface (first input unit) 23 configured to acquire the quality information measured by the measuring instrument 11, and the microphone (second input unit) 24 configured to acquire, as an input, a voice uttered by the worker for acquisition of the identification information.

The processing unit 21 is capable of performing the conversion processing of converting the voice into data processable by the processing unit 21, and the save processing of saving the identification information and the quality information in association with each other, with the input of the voice as a condition (trigger).

According to the save processing, the identification information and the quality information obtained by the measuring instrument 11 are saved in the server apparatus 12 in association with each other. The save processing is performed with the worker's voice (utterance) acquired by the microphone 24 as a condition (trigger). This configuration eliminates the necessity of manual input by the worker and improves the workability of quality management of the grape.

According to the first means illustrated in FIG. 14, the worker utters the identification information. The processing unit 21 uses, as the identification information, the data obtained by converting the voice. The processing unit 21 performs, as the save processing, processing of saving the identification information based on the data and the quality information in association with each other, with the input as a condition.

According to the first means, the worker utters the identification information at the timing when conducting the quality measurement of the grape using the measuring instrument 11. The processing unit 21 performs the conversion processing to convert the identification information (voice) into the data. The identification information converted into the data and the quality information obtained by the measuring instrument 11 are stored in association with each other.

According to the second means illustrated in FIG. 15, the management apparatus 10 outputs by a sound the identification information, and the worker approves the identification information.

Therefore, the generation unit 27 of the management apparatus 10 generates the identification information. The speaker 25 outputs by a sound the generated identification information.

After the output by the sound from the speaker 25, the microphone 24 acquires, as an input, a response to the output sound from the speaker 25, i.e., the voice uttered by the worker.

The processing unit 21 performs, as the save processing, the processing of saving the identification information generated by the generation unit 27 and output by a sound and the quality information in association with each other, with the input of the voice as a condition (trigger).

According to the second means, the management apparatus 10 (generation unit 27) generates the identification information, and the speaker 25 outputs by a sound the identification information. The worker utters a response to the output sound, i.e., a voice for approving the identification information. The processing unit 21 performs the conversion processing to convert the voice uttered by the worker into data processable by the processing unit 21, thereby recognizing that the identification information has been approved. This identification information and the quality information obtained by the measuring instrument 11 are stored in association with each other.

As described above, continuously accumulating the associated information enables management of a time-series change in quality on a grape and tree basis. The time-series change is displayed on the display 22 or is displayed on the display of the server apparatus 12.

The computer program of the present embodiment is a computer program for causing a computer (the management apparatus 10 which is a mobile terminal apparatus) to carry out at least the following steps.
First input step: a step of acquiring quality information measured by the measuring instrument 11 (ST707 of FIG. 14, ST717 of FIG. 15).
Second input step: a step of acquiring a voice as an input (ST701 of FIG. 14, ST713 of FIG. 15).
Conversion processing step: a step of converting the voice into data processable by the computer (ST702 of FIG. 14, ST714 of FIG. 15).
Save processing step: a step of saving the identification information and the quality information in association with each other, with the input voice as a condition (trigger) (ST708 of FIG. 14, ST718 of FIG. 15).

### [Others]

The computer program used in the management apparatus 10 may be produced and sold independently of the management apparatus 10 (mobile terminal apparatus). For example, the computer program may be provided in such a manner that the computer program is stored in a computer-readable storage medium. The computer program may also be provided in such a manner that the computer program is downloaded through an electric communication line (e.g., the Internet).

In the case of the embodiment illustrated in FIG. 1, the management apparatus 10 is provided separately from the measuring instrument 11.

The management apparatus 10 may be integrated with the measuring instrument 11. For example, the computer program for causing the management apparatus 10 to perform the function of the analysis unit 45 of the measuring instrument 11 may be saved in the management apparatus 10, which is a mobile terminal apparatus. The measurement unit 42 is connected to an interface of the management apparatus 10. The management apparatus 10 may thus function as the measuring instrument 11.

Alternatively, the measuring instrument 11 may function as the management apparatus 10.

The foregoing embodiments are in all aspects illustrative and not restrictive. The scope of the present invention is defined by the claims rather than the foregoing embodiments, and includes all modifications within the scope of the configurations recited in the claims and their equivalences.

### REFERENCE SIGNS LIST

- 7: management system
- 10: management apparatus
- 11: measuring instrument
- 12: server apparatus
- 13: communication network
- 20: storage unit
- 21: processing unit
- 22: display
- 23: input interface (first input unit)
- 24: microphone (second input unit)
- 25: speaker (output unit)
- 26: position acquisition unit
- 26a: RTK receiver
- 26b: GNSS receiver
- 26c: processing circuit
- 27: generation unit
- 28: camera
- 29: communication unit
- 31: control unit
- 32: storage unit
- 33: communication unit
- 35: first database
- 36: second database
- 41: housing
- 42: measurement unit
- 43: cable
- 44: communication unit
- 45: analysis unit
- 50: tree

## Claims

1. A fruit management apparatus including a processing unit configured to perform, using one or both of identification information on a fruit and identification information on a tree bearing the fruit, information processing for managing quality information of the fruit,
the fruit management apparatus comprising:
a first input unit configured to acquire the quality information measured by a measuring instrument; and
a second input unit configured to acquire a voice as an input,
wherein
the processing unit performs save processing of saving the quality information, when the voice input to the second input unit is a voice that instructs the processing unit to perform the save processing.

2. The fruit management apparatus according to claim 1, wherein
when the voice that instructs the processing unit to perform the save processing is convertible into the identification information, the processing unit converts the voice that instructs the processing unit to perform the save processing into identification information and saves the converted identification information and the quality information in association with each other in the save processing.

3. The fruit management apparatus according to claim 1, wherein
in a case where the second input unit acquires the voice that instructs the processing unit to perform the save processing and a different voice from the voice that instructs the processing unit to perform the save processing, when the different voice is convertible into the identification information, the processing unit converts the different voice into identification information and saves the converted identification information and the quality information in association with each other in the save processing.

4. The fruit management apparatus according to claim 2 or 3, wherein
when the voice that instructs the processing unit to perform the save processing or a different voice from the voice that instructs the processing unit to perform the save processing is convertible into a character string represented by at least one of symbols and alphanumeric characters and the character string is distinguishable from a word, the processing unit determines that the voice that instructs the processing unit to perform the save processing or the different voice from the voice that instructs the processing unit to perform the save processing is convertible into the identification information.

5. The fruit management apparatus according to any one of claims 1 to 4, comprising
a storage device configured to store determination information for determining the voice that instructs the processing unit to perform the save processing,
wherein
the processing unit determines, based on the determination information, whether the voice input to the second input unit is the voice that instructs the processing unit to perform the save processing.

6. The fruit management apparatus according to claim 5, wherein
when the voice input to the second input unit is different from the voice that instructs the processing unit to perform the save processing, the processing unit does not start the save processing, but performs correction processing of allowing input of a voice through the second input unit.

7. The fruit management apparatus according to claim 6, comprising
an output unit configured to output a sound,
wherein
the processing unit performs, as the correction processing, processing of causing the output unit to output, by a sound, information that prompts a worker to utter the identification information.

8. The fruit management apparatus according to any one of claims 1 to 7, wherein
when the voice input to the second input unit is convertible into identification information, the processing unit is capable of performing registration processing of registering the identification information indicated by the voice, in a database.

9. The fruit management apparatus according to any one of claims 1 to 8, wherein
the identification information is identification information ordered in a direction from one side to another side of a tree row constituted of a plurality of the trees aligned in a row.

10. The fruit management apparatus according to any one of claims 1 to 9, comprising
a position acquisition unit configured to acquire position information indicating a position where a measurement is conducted using the measuring instrument,
wherein
the processing unit is capable of performing grouping processing of grouping, based on the position information, associated information including the identification information and the quality information associated with each other.

11. The fruit management apparatus according to claim 10, wherein
the processing unit is capable of performing, as the grouping processing, processing of adding row identification information indicating a row, to the associated information on a plurality of the trees whose measurement positions are arranged in one direction.

12. The fruit management apparatus according to any one of claims 1 to 11, wherein
the processing unit is capable of performing second save processing of further saving one or both of additional information of the fruit and additional information of the tree in association with associated information including the identification information and the quality information associated with each other.

13. The fruit management apparatus according to any one of claims 1 to 12, wherein
the processing unit is capable of performing output processing of outputting measurement task information indicating a task of measuring the fruit using the measuring instrument.

14. The fruit management apparatus according to claim 13, wherein
the processing unit performs, as the output processing, processing of outputting, as the measurement task information, information of a target tree corresponding to a tree bearing a fruit to be measured.

15. The fruit management apparatus according to claim 14, comprising
a position acquisition unit configured to acquire position information indicating a position where a measurement is conducted using the measuring instrument,
wherein
the processing unit is capable of performing second collation processing of collating the position information acquired by the position acquisition unit, with a database in which position information of a tree is previously accumulated, and
the processing unit performs, as the second collation processing, processing of collating position information of the target tree acquired by the position acquisition unit, with the position information of the target tree indicated by the measurement task information, the position information being accumulated in the database.

16. The fruit management apparatus according to claim 15, wherein
when a result of the second collation processing is positive, the processing unit starts the save processing.

17. The fruit management apparatus according to claim 15 or 16, wherein
when a result of the second collation processing is negative, the processing unit does not start the save processing, but performs correction processing of allowing input of a voice through the second input unit.

18. The fruit management apparatus according to any one of claims 1 to 17, wherein
the fruit is a grape.

19. A fruit management system comprising:
the fruit management apparatus according to any one of claims 1 to 18; and
a measurement unit capable of transmitting the quality information to the fruit management apparatus.

20. A computer program for causing a computer to operate as a fruit management apparatus configured to perform, using one or both of identification information on a fruit and identification information on a tree bearing the fruit, information processing for managing quality information of the fruit,
the computer program causing the computer to carry out:
a first input step of acquiring the quality information measured by a measuring instrument;
a second input step of acquiring a voice as an input; and
a save processing step of performing save processing of saving the quality information, when the input voice is a voice that instructs the computer to perform the save processing.
